(19) Europäisches Patentamt European Patent Office Office européen des brevets

(11) **EP 0 811 301 B1**

(12) **EUROPEAN PATENT SPECIFICATION**

(45) Date of publication and mention
of the grant of the patent:
**09.04.2008 Bulletin 2008/15**

(21) Application number: **96906451.8**

(22) Date of filing: **20.02.1996**

(51) Int Cl.:
*H04R 3/00* (2006.01)     *H04M 9/08* (2006.01)

(86) International application number:
**PCT/US1996/002039**

(87) International publication number:
**WO 1996/026624 (29.08.1996 Gazette 1996/39)**

(54) **APPARATUS AND METHOD FOR ADAPTIVELY PRECOMPENSATING FOR LOUDSPEAKER DISTORTIONS**

VORRICHTUNG UND VERFAHREN ZUR ADAPTIVEN VORKOMPENSIERUNG VON LAUTSPRECHERVERZERRUNGEN

SYSTEME ET PROCEDE DE PRECOMPENSATION ADAPTATIVE DE DISTORSIONS DE HAUT-PARLEUR

(84) Designated Contracting States:
**BE DE ES FR GB SE**

(30) Priority: **24.02.1995  US 393726**

(43) Date of publication of application:
**10.12.1997  Bulletin 1997/50**

(73) Proprietor: **Ericsson Inc.**
**Plano, TX 75024 (US)**

(72) Inventors:
• **DENT, Paul, Wilkinson**
**Pittsboro, NC 27312 (US)**
• **RASMUSSON, Jim, Agne, Jerher**
**S-277 57 Brösarp (SE)**
• **JOHNSEN, Ronald, J.**
**Cary, NC 27513 (US)**

(74) Representative: **Kühn, Friedrich Heinrich**
**Ericsson AB**
**Patent Unit Radio Networks**
**164 80 Stockholm (SE)**

(56) References cited:
EP-A- 0 508 392          WO-A-92/10876
US-A- 5 131 032          US-A- 5 237 562

**Description**

This application is related to United States application Serial No. 08/393,711, entitled "Apparatus and Method for Cancelling Acoustic Echoes Including Non-Linear Distortions in Loudspeaker Telephones," filed concurrently herewith and assigned to the assignee of the present invention, the disclosure of which is hereby incorporated in its entirety herein by reference.

Field of the Invention

This invention relates to the field of audio systems, and more particularly to the suppression of sound distortion in a loudspeaker.

Background of the Invention

An audio system includes an output transducer, such as a loudspeaker, to produce a sound pressure wave in response to an input signal representative of a desired sound pressure wave. Most loudspeakers, however, generate an actual sound pressure wave that differs from the desired sound pressure wave represented by the input signal. This difference is due, in part, to non-linear aspects of the loudspeaker. In particular, the diaphragm of a loudspeaker has a non-linear stress-strain curve. Furthermore, the motion of the diaphragm results in the delay modulation of higher frequencies by lower frequencies. Accordingly, there have been efforts in the art to compensate for these and other factors which cause a loudspeaker to produce an actual sound pressure wave which is different from the desired sound pressure wave.

For example, United States Patents No. 4,426,552 and No. 4,340,778 both to Cowans et al. and both entitled "Speaker Distortion Compensator," disclose means coupled to each speaker in a system for compensating for mass, compliance, and damping. The processing circuits are exemplified by active and passive circuits which provide a feedforward component which nullifies the spurious emanations that would otherwise develop as the loudspeaker diaphragm attempts to follow complex motions that are otherwise impermissible because of its dynamics.

United States Patent No. 4,709,391 to Kaiser et al. entitled "Arrangement For Converting An Electric Signal Into An Acoustic Signal Or Vice Versa And A Non-Linear Network For Use In The Arrangement" discloses an arrangement including means for reducing distortion in the output signal. The reducing means comprise a non-linear network arranged for reducing non-linear distortion by compensating for at least a second or higher order distortion component in the output signal.

Furthermore, the article by de Vries et al. entitled "Digital Compensation of Nonlinear Distortion in Loudspeakers," IEEE, 1993, pp. I-165 to I-167, discloses a method to compensate for non-linear distortions produced by a loudspeaker in real-time by non-linear digital signal processing. An electrical equivalent circuit of an electrodynamic loudspeaker is developed resulting in a linear lumped parameter model. The linear model is extended to include non-linear effects, and an inverse circuit is implemented in real-time on a digital signal processor.

Similarly, the article by Gao et al. entitled "Adaptivle Linearization of A Loudspeaker," IEEE, 1991, pp. 3589 to 3592 discusses compensation for non-linear performance of a loudspeaker. As with the de Vries et al. article a model of the loudspeaker is developed. An adaptive pre-distortion linearization scheme is used for linearizing a loudspeaker.

United States Patent No. 5,131,032 describes an echo canceller and a communication apparatus which is capable of stably reproducing sounds other than a received sound during speech through a telephone and the received sound is heard by the other party to the speech.

Notwithstanding the above mentioned references, there continues to exist a need in the art for improved audio systems and methods which compensate for the non-linear aspects of a loudspeaker. This need is critical in telephony and particularly in speakerphone applications where a small loudspeaker is used. This need is even more critical in cellular speakerphone applications where intelligibility is difficult to begin with.

Summary of the Invention

Therefore, it is an object of the present invention to provide an improved audio system.

It is another object of the present invention to provide an improved cellular radiotelephone.

It is still another object of the present invention to provide an improved audio system and method for precompensating for non-linear aspects of a loudspeaker in order to reduce non-linear loudspeaker distortions.

It is still another object of the present invention to provide an improved precompensating cellular radiotelephone.

These and other objects are provided according to the present invention by providing an adaptive precompensating method and system which modifies the operation of a precompensating filter in an audio system in response to the output of the loudspeaker. Accordingly, the precompensating filter operations are not fixed but rather are varied over time. Accordingly, the precompensating filter operation can be modified to account for aging of the loudspeaker and other effects such as changes in the environment in which the system is operated.

In a preferred embodiment, a model of the electrical characteristics of a loudspeaker is used to derive an approximation of a transfer function of the loudspeaker. An inverse of this transfer function is performed by the precompensating filter on the input signal which represents the desired loudspeaker output. The precompensated signal is then applied to the loudspeaker. Accordingly, the output of the loudspeaker more closely resembles the desired loudspeaker output. An input transducer, such as a microphone, is used to provide a feedback loop from the loudspeaker to the precompensating filter so that the precompensating filter can compare the actual loudspeaker output with the desired output. This feedback allows the precompensating filter to adapt the approximated inverse transfer function in order to improve its operation.

The present invention is preferably applied to a loudspeaker cellular radiotelephone designed for hands free operation. This application is particularly appropriate because the loudspeaker telephone includes a loudspeaker and a microphone. Because the loudspeaker is typically constrained in its size and required to produce a sound pressure waveform having a relatively high amplitude, the distortions produced by the loudspeaker can be more pronounced than the distortions produced in other audio systems. Furthermore, loudspeaker cellular telephones are often used in inherently noisy environments, such as an automobile, making their use difficult to begin with. Accordingly, the precompensating filter can be used to reduce the distortions generated by the small loudspeakers used in these applications thereby making the reproduced sound more understandable.

The present invention may also be applied to hi-fi audio systems by including a microphone to provide feedback. In either application, the system can be used to monitor the loudspeaker output and adapt the operation of the precompensating filter as needed. The system can adapt its operation to account for aging, as well as environmental changes such as the acoustical characteristics of the space in which the system operates.

The operation of the present invention can be further improved by including an echo filter which provides an estimate of the echo or ring-around signal from the loudspeaker to the microphone. This estimated echo signal is then subtracted from, or combined with, the sound signal generated by the microphone, thereby reducing the echo portion of the sound signal in the feedback loop to the precompensating filter. Accordingly, the precompensating filter can more accurately modify its operation.

The echo filter can be provided with another feedback loop. By comparing the estimated echo signal with the actual echo signal, the echo filter can modify its operation in order to further reduce the echo portion of the signal. The reduction of non-linear aspects of the loudspeaker by the precompensating filter allows the echo filter to more accurately modify its own operation.

In a most preferred embodiment, both the precompensating filter and the echo filter are implemented in a digital signal processor ("DSP"). In this embodiment, analog-to-digital and digital-to-analog converters can be used.

Brief Description of the Drawings

Figure 1 is a schematic diagram of an audio system according to the present invention including a loudspeaker, a precompensating filter, and a finite-impulse-response filter.
Figure 2 is a schematic diagram representing a model of the electrical characteristics of the loudspeaker shown in Figure 1.

Detailed Description of a Preferred Embodiment

The present invention will now be described more fully hereinafter with reference to the accompanying drawings, in which preferred embodiments of the present invention are shown. This invention may, however, be embodied in many different forms and should not be construed as limited to the embodiment set forth herein; rather, these embodiments are provided so that this disclosure will be thorough and complete, and will fully convey the scope of the invention to those skilled in the art. Like numbers refer to like elements throughout.

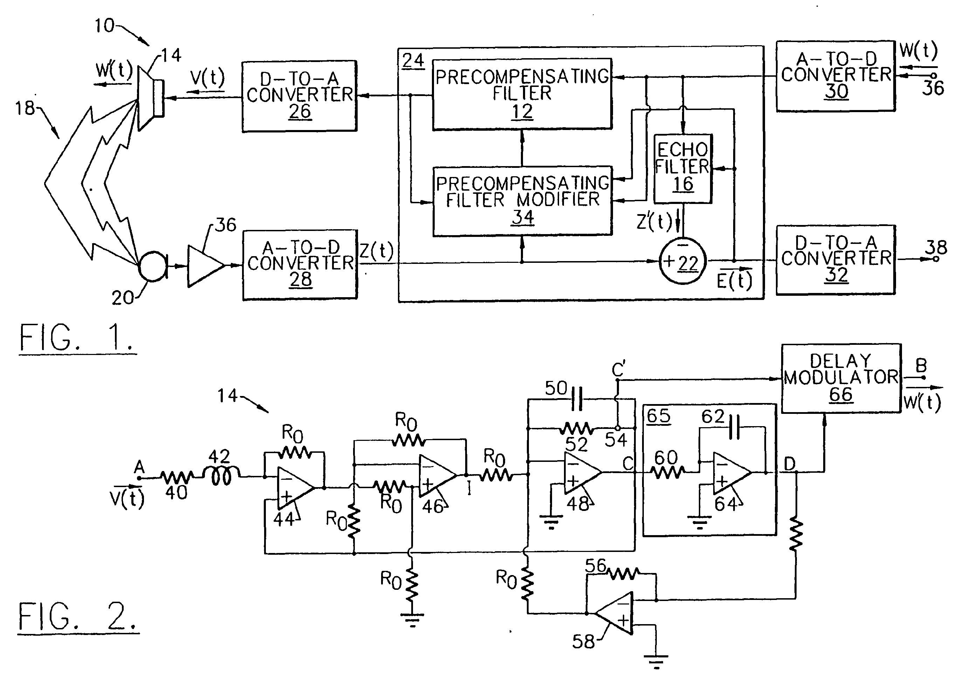

The audio system **10** shown in Figure 1 includes precompensating means such as adaptive precompensating filter **12** for reducing the effects of non-linear aspects of the output transducer means, preferably implemented as loudspeaker **14**. The system also includes an adaptive echo filter **16** for reducing environmental distortions due to the multi-path channel **18** from the loudspeaker **14** to the input transducer means, preferably implemented as microphone **20**. In combination, the precompensating filter and echo filter enhance the operation of each other. The loudspeaker **14** characteristics can be represented by a transfer function H having both linear and non-linear components. By approximating an inverse $\underline{H}^{-1}$ of the loudspeaker transfer function H, the precompensating filter **12** is able to reduce the non-linear distortions generated by the loudspeaker. A precompensating filter modifier **34** in the feedback loop from the precompensating filter **12** through the loudspeaker **14** and multi-path channel **18** to the microphone **20** and back to the precompensating filter **12** can modify or adapt the approximated inverse transfer function $\underline{H}^{-1}$ of the precompensating filter to further reduce non-linear distortions generated by the loudspeaker. The precompensating filter modifier can include a memory for storing portions of the various waveforms such as W(T), V(t), Z(t), and E(t) for comparison.

The echo filter **16** may be used to generate an approximation of environmental distortions, such as echo or ring-around, occurring over multi-path acoustic channel **18** between the loudspeaker **14** and the microphone **20.** This approximation can be combined with the sound signal generated by the microphone **20** through combination or subtraction means, such as subtractor **22**, to reduce undesired environmental distortions such as echo or ring-around in the signal. Modification means, including a feedback loop from the echo filter **16** through the subtractor **22** and back to the echo filter **16**, allows the echo filter to modify its operation so as to further reduce the effects of environmental distortions. In a cellular telephone with a loudspeaker, the echo filter **16** reduces feedback of the loudspeaker output to the distant party.

By combining the precompensating filter **12** and echo filter **16**, distortions due to non-linear aspects of the loudspeaker **14** and distortions due to the multi-path channel **18** from the loudspeaker **14** to the microphone **20** may be reduced further than either alone would allow. That is, the precompensating filter **12** reduces non-linear distortions that could not otherwise be accounted for by the echo filter **16**, while the echo filter **16** reduces environmental distortions that would otherwise be unaccounted for by the precompensating filter **12**. In other words, each of the precompensating filter and the echo filter reduce distortions in the feedback loop for the other. Accordingly, the operation of each of the precompensating filter and the echo filter can be modified to more closely approximate a desired level of operation.

Figure 1 also shows that the precompensating filter **12**, the echo filter **16**, precompensating filter modifier **34**, and the subtractor **22** may be incorporated into a single digital signal processor **24** ("DSP"). When implemented as a digital signal processor **24**, the invention may require a digital-to-analog ("D-to-A") converter **26** between the DSP **24** and the loudspeaker **14** and an analog-to-digital ("A-to-D") converter **28** between the microphone **20** and the DSP **24.** In addition, A-to-D converter **30** and D-to-A converter **32** may be required if signals are supplied from or to an analog source. The system may also include an amplifier 36.

When implemented as a loudspeaking cellular telephone, an input speech waveform W(t) representative of the distant party speech is received by the telephone transceiver from a cellular telephone system base station, and after suitable processing is applied at input node **36**. In a mobile cellular telephone system, such processing can include demodulation of a digitally modulated radio signal, error correction decoding, and speech decoding using, for example, a Residually Excited Linear Prediction ("RELP") or Vector Set Excited Linear Prediction ("VSELP") speech synthesizer. The waveform W(t) is the result of such processing, and may be in a digital format which is more suitable for processing by the echo canceler of the present invention. For example, if the telephone supplies a digital signal at input node **36** and requires a digital signal at node **38**, A-to-D converter **30** and D-to-A converter **32** are not needed. If, however, the telephone provides an analog signal at node **36** and requires an analog signal at node **38**, converters **30** and **32** may be required. Precompensating filter **12** reduces loudspeaker distortions while echo filter **16** reduces echo and ring-around.

In the loudspeaking cellular telephone embodiment, the training of the precompensating and echo filters can be performed continuously. Preferably, the training function is performed when only the distant party is speaking so that the relevant signals may be more easily isolated. This can be accomplished by comparing the input signal and the sound signal to determine when the microphone is receiving significant sound pressure waves generated by the loudspeaker alone and adapting the precompensating filter at that time. A device that determines when the signal out of the microphone is substantially derived from acoustic feed back is discussed, for example, in U.S. Patent No. 5,263,019 to Chu entitled "Method and Apparatus for Estimating the Level of Acoustic Feedback Between a Loudspeaker and Microphone," the disclosure of which is hereby incorporated in its entirety herein by reference. Alternately, the training function may be preformed periodically by using test signals.

When implemented as a hi-fi audio system, the input signal at node **36** may be supplied by any of a number of digital or analog audio components such as a tuner, tape player, compact disk player, etc. In this embodiment, there may be no need for D-to-A converter **32** or output node **38**, and the precompensating filter and echo filter work together to reduce loudspeaker distortions. The training function is preferably performed periodically using test signals which may be supplied by a tape or other signal input means.

Figure 2 shows an analog model of the electrical characteristics of a typical loudspeaker **14**. An electrical input signal is applied at input node A to create a current through the loudspeaker coil. The loudspeaker input signal is a precompensated input signal V(t) from the precompensating filter **12** shown in Figure 1. The current flow is opposed by the coil resistance **40** and coil inductance **42**, as well as the back EMF induced by the coil velocity in the magnetic field. By suitable choice of units and scaling in the model, the voltage at node C may be equal to the back-EMF as well as being representative of the coil velocity. The back EMF from node C is presented in opposition to the drive voltage at input node **A** by connection to the positive input of differencing operational amplifier **44**. The output of amplifier **44** is the sum of the back EMF from node C and a term proportional to the current in the coil. Amplifier **46** subtracts the back EMF to yield a voltage representing the current in the coil only, and by suitable choice of arbitrary units, this voltage also represents the force the coil exerts on the loudspeaker diaphragm by the current reacting with the magnetic field produced by the loudspeaker magnet. As will be understood by those having skill in the art, the term diaphragm is used throughout this specification in its broadest sense so as to include a planar diaphragm, a dome shaped diaphragm, or a cone shaped diaphragm.

The force causes an acceleration of the loudspeaker diaphragm to a certain velocity which is resisted by the diaphragm's mass or inertia and by air resistance encountered. Operational amplifier **48** has a feedback capacitor **50** representing the diaphragm's mass and a feedback resistor **52,** which might be non-linear, representing the air resistance acting against the diaphragm. The current flow through resistor **52** opposes the accelerating force and relates to the air pressure wave created by the diaphragm movement. Current sensor **54** generates a signal at node **C'** which represents this air pressure wave created by the diaphragm movement.

The pressure wave, however, emanates from a moving object, the diaphragm. When the diaphragm is instantaneously displaced to the front of the loudspeaker, it will be closer to a listener in front of the loudspeaker. Accordingly, sound waves will reach the listener with a shorter time delay than when the diaphragm is displaced toward the rear of the loudspeaker. Diaphragm displacements occur with greatest amplitude at low frequencies giving rise to the non-linear phenomenon of delay modulation (also known as phase modulation) of higher frequencies by lower frequencies. A signal representative of the diaphragm displacement is generated at node D by resistance **60,** capacitance **62,** and operational amplifier **64**, which together make up integrator **65.** Thus the pressure wave signal from the diaphragm generated at node C' is subjected to delay modulation produced by delay modulator **66** according to the diaphragm displacement signal generated at node **D** in order to produce the net sound pressure waveform at output node **B** that is transmitted to a listener.

The diaphragm displacement signal generated at node **D** is also needed to model the diaphragm spring restoring force that opposes the force exerted by the coil which is represented by the coil force signal generated by operational amplifier **46**. The diaphragm spring is expected to exhibit a non-linear stress-strain curve modelled by the non-linear resistor **56.** Operational amplifier **58,** having non-linear resistor **56** in its feedback path, converts the displacement-related signal generated at node **D** to a restoring force which adds in opposition to the coil force signal at the input of operational amplifier **48.** The resistors labeled $R_0$ may be equal to 1 ohm.

Thus, with appropriate choice of parameters and scalings in the above-described model of Figure 2, the sound pressure wave generated at loudspeaker output node **B** can be predicted from the electrical signal applied to the loudspeaker input node **A.** According to one aspect of the invention, the model discussed above is used in reverse to determine the electrical signal with which to drive the loudspeaker at input node **A** so as to obtain a desired sound pressure wave at output node **B**. In other words, the loudspeaker model is used to determine an approximate inverse of the transfer function of the loudspeaker. This may be done as described below.

The desired sound pressure wave is represented by an input signal W(t) which is applied at node **36,** and converted to a digital signal by A-to-D converter **30** if necessary. The precompensating filter **12** generates a precompensated signal V(t) which is converted to an analog signal by D-to-A converter **26,** if necessary. If signal V(t) is correctly generated, the output sound pressure wave W'(t) will be a close approximation of the desired sound pressure wave represented by signal W(t).

As shown in Figure 2, the sound pressure waveform W'(t) is produced at output node **B** and may be represented by a sequence of numerical samples. These samples are expressed as:

..., W(i-1), W(i), W(i+1), ....

These samples are approximately equal to the result of delay-modulating a signal U(t) at the node C' of Figure 2, represented by samples,..., U(i-1), U(i), U(i+1), ..., by the diaphragm displacement-related signal D(t) represented by samples, ..., D(i-1), D(i), D(i+1), ....

Because of non-linear resistor **52** which represents air resistance, the voltage across the resistor **52** at node C may be represented by a function F(U(t)). The function F(U(t)) is a function of the current signal generated at node **C'** so that signal values of function C(t) at node **C**, represented by samples, ..., C(i-1), C(i), C(i+1), ..., are given by the following equations:

```
C(i-1) = F(U(i-1))
C(i)   = F(U(i))                              (1)
C(i+1) = F(U(i+1)) etc.
```

Integrator **65** integrates the signal C(t) at node C to obtain the signal D(t) at node D by using the discrete-time approximations:

```
D(i-1)   = D(i-2)  - C(i-2)dT
D(i)     = D(i-1)  - C(i-1)dT          (2)
D(i+1)   = D(i)    - C(i)dT etc.
```

It can be seen that, to calculate $D(i)$, only $C(i-1)$ and thus $U(i-1)$ is needed. Assuming that these samples were computed on a prior iteration and that we now wish to compute $U(i)$, the delay modulation produced by delay modulator **66** is represented by a variable time-interpolation between the $W'(t)$ sound pressure wave samples as follows. If there is no delay modulation:

```
D(i) = 0; U(i) = W(i)  .
```

Otherwise, if there is delay modulation:

```
U(i) = W(i) + 0.5(W(i+1) - W(i-1))D(i).     (3)
```

This calculation assumes a scaling in the integrator **65** such that signal $D(t)$ is of the correct magnitude to insert in the above equation.

For example, if the sample rate is 8k samples per second, time intervals (i-1), (i), (i+1), ..., are $125\mu S$ apart. In $125\mu S$, sound travels approximately 1.5 inches. Accordingly, the diaphragm displacement samples $D(i)$ should be computed by integrator **65** in units of 1.5 inches. $D(i)$ is expected to be much less than unity with this scaling. If $D(i)$ is made equal to 1 unit, signifying a delay modulation of one whole sample, then the formula is changed to:

```
U(i) = W(i-1)  for D(i) = -1
```

and

```
U(i) = W(i+1)  for D(i) = +1
```

or:

```
U(i) = 0.5(W(i) + W(i+1)) for D(i) = 0.5
```

and

```
U(i) = 0.5(W(i) + W(i-1)) for D(i) = -0.5.
```

Since $D(i)$ is expected to be less than 0.5 however, equation (3) may be more appropriate.

In the equations shown above, the sign of the delay modulation has been arbitrarily assumed. It may be necessary to change the sign of the delay modulation, by altering the scaling of integrator **65.** This may be accomplished by introducing a scaling factor into equation (2). Having determined $D(i)$ from equation (2), $U(i)$ from equation (3) and $C(i)$ from equation (1), the current sample value $I(i)$ into operational amplifier **48** can be determined using the following equation:

```
I(i) = -U(i) - (C(i) - C(i-1))*X + G(D(i)) (4)
```

In this equation, $C(i) - C(i-1)$ represents the rate of change of voltage at the output of operational amplifier **48,** and $X$ represents the diaphragm-mass parameter, capacitor **50**, times dT.

The non-linear function G(t) represents the diaphragm restoring force versus displacement curve (stress-strain curve). The relative magnitudes or scalings of the air-resistance function F(t), the diaphragm-mass parameter X and the function G(t) are assumed to have been correctly chosen so that they may be added in equation (4) with no additional scaling factors.

The precompensated input voltage signal V(t) represented by samples, ..., V(i-1), V(i), V(i+1),..., may now be calculated from the equation shown below:

$$V(i) = I(i)*R + (I(i)-I(i-1))*L/dT + C(i). \quad (5)$$

In this equation, R and L are the coil resistance **40** and inductance **42** respectively. In this way, a sequence, ..., V(i-2), v(i-1), V(i), ..., of the required input voltage samples may be calculated to produce the sound pressure wave samples, ..., W'(i-2), W'(i-1), W'(i), ..., which closely approximate the desired sound pressure samples represented by, ..., W(i-2), W(i-1), W(i)....

The five most relevant equations are collected below:

$$C(i) = F(U(i)) \quad (1)$$

$$D(i) = D(i-1) - C(i-1)*dT \quad (2)$$

$$U(i) = W(i) + 0.5(W(i+1) - W(i-1)*D(i) \quad (3)$$

$$I(i) = -U(i) - (C(i) - C(i-1))*X + G(D(i)) \quad (4)$$

$$V(i) = I(i)*R + (I(i)-I(i-1))*L/dT + C(i) \quad (5)$$

These five equations contain the following parameters:

| | |
|---|---|
| Non-linear air-resistance function | F |
| Integrator **65** scaling factor (delay modulation parameter) | dT |
| Diaphragm mass inertia parameter | X |
| Diaphragm spring stress-strain function | G |
| Coil resistance | R |
| Coil inductance parameter L/dT | Y = L/dT |

This number of parameters is sufficient to implement the model of Figure 2. Since the parameter dT appears independently only in equation (2), it may be chosen to obtain the correct amount of delay modulation and is therefore not necessarily equal to the sample spacing. This calculation is allowable because the only other place that the parameter dT appears is in the term L/dT. By replacing the term L/dT with Y as shown above, the ability to independently represent the coil inductance effect is preserved.

If the amount of delay modulation is varied by choosing dT to give another scaling to D(t), it may be necessary to change the function G(t) to avoid altering the stress-strain curve of the diaphragm spring. To avoid this dependence, it may be more appropriate to transfer the delay modulation dT to the delay modulation equation (2) so that varying dT does not require G(t) to be altered in order to maintain the same stress-strain curve. Thus, the following equations are obtained.

$$D(i) = D(i-1) - C(i-1)$$

$$U(i) = W(i) + 0.5(W(i+1) - W(i-1))*D(i)*dT$$

$$C(i) = F(U(i))$$

$$I(i) = -U(i) - (C(i) - C(i-1))*X + G(D(i))$$

$$V(i) = I(i)*R + (I(i)-I(i-1))*Y + C(i)$$

A further simplification is to assume that the air-resistance function F(t) is linear, and that C(i) = U(i). An arbitrary scaling here represents the fact that no particular units have been assumed for defining the conversion of electrical signals to sound waves. The following four equations then result:

$$D(i) = D(i-1) - C(i-1) \tag{6}$$

$$C(i) = W(i) + 0.5(W(i+1) - W(i-1))*D(i)*dT \tag{7}$$

$$I(i) = - C(i) - (C(i) - C(i-1))*X + G(D(i)) \tag{8}$$

$$V(i) = I(i)*R + (I(i)-I(i-1))*Y + C(i) \tag{9}$$

The delay modulation and the diaphragm stress-strain curve are the only non-linear effects modelled in the equations listed above. The delay modulation is represented by the simple multiplicative parameter dT, and the diaphragm stress-strain curve is represented by a function G(D(t)).

The function G(D(t)) can be partitioned into a linear stress-strain curve of slope Go plus the non-linear remainder $G'(D(t)) = G(D(t)) - G_0 D(t)$. The purpose of this is to enable the small-signal equations to be simplified to the linear equations:

$$D(i) = D(i-1) - C(i-1)$$

$$C(i) = W(i)$$

$$I(i) = -C(i) - (C(i) - C(i-1))*X + G_0*D(i)$$

$$V(i) = I(i)*R + (I(i)-I(i-1))*Y + C(i)$$

The linear parameters in the equations shown above can be determined by measurement. The determination of the coil resistance and inductance parameters R and Y is straightforward as will be understood by one having ordinary skill in the art. The diaphragm mass and linear part of the diaphragm stress-strain curve can be determined by measuring the diaphragm's mechanical resonant frequency and Q factor when the loudspeaker is in its intended housing.

The small-signal parameters are then fixed and the non-linear parameters dT, representing delay modulation, and G'(D(t)), representing the non-linear part of the stress-strain curve, may be determined by large signal measurements. The delay modulation may be determined by using a spectrum analyzer to observe the intermodulation produced on a two-tone test between a low frequency sine wave signal that causes large diaphragm displacements and a high frequency sine wave signal that is most sensitive to phase modulation by the low-frequency diaphragm displacements.

The non-linear part of the stress-strain curve may be obtained by using a spectrum analyzer to observe the harmonic distortion of a large, low-frequency, sine wave signal as a function of amplitude and finding a function G'(D(t)) by trial and error that explains it. The function can be represented in a numerical signal processor such as a DSP by a look-up table. Alternatively, this curve can be directly determined by physical measurements of force or DC current required to displace the diaphragm a measured amount. The invention may include the provision of a diaphragm displacement or movement sensor for the purpose of assisting in real-time determination or adaptive updating of model parameters.

In practice, a typical stress-strain curve G'(D(t)) may be assumed to be known apart from a scaling factor for a particular loudspeaker. Likewise, it may be assumed that the linear model parameters resulting in particular diaphragm mechanical resonances are well known for a particular loudspeaker size and make. Small errors in small-signal parameters that effect small-signal frequency response are not of great consequence since any system is assumed to have some ability to adapt linear frequency responses to provide compensation. For example, a manual equalizer or tone control may be provided.

In a cellular telephone including a loudspeaker for hands-free operation, the linear frequency response from the loudspeaker to the microphone includes reflections from nearby objects, possible room resonances, and other distortions induced by the environment which are illustrated in Figure 1 by the multi-path acoustic channel **18.** These environmental distortions, known as echo or ring-around can be modeled by an echo filter such as an adaptive finite-impulse-response (FIR) filter.

Adaptive filters used in echo cancellation are discussed, for example in U.S. Patent No. 5,237,562 to Fujii et al. entitled "Echo Path Transition Detection." Other echo cancelers including adaptive echo estimation or a finite impulse response filter are respectively discussed in U.S. Patent No. 5,131,032 to Esaki et al. entitled "Echo Canceler and Communication Apparatus Employing the Same," and U.S. Patent No. 5,084,865 to Koike entitled "Echo Canceller Having FIR and IIR Filters for Canceling Long Tail Echoes." Each of the three above cited patents are hereby incorporated in their entirety herein by reference.

The modeled distortions can be subtracted from the sound signal generated by the microphone to reduce the environmental distortions. The echo or ring-around is, however, imperfectly modeled due, in part, to the non-linear loudspeaker effects discussed above which are not modeled by the echo filter **16.** Accordingly, imperfect echo cancellation results. Using the precompensating techniques derived above, however, the channel from electrical input to the precompensating filter **12** to the microphone **20** output may be linearized such that it is more accurately modeled by the echo filter **16,** giving better echo cancellation.

It is now described with the aid of Figure 1 how the precompensating filter **12** can be adapted in real time to adjust the non-linear distortion terms dT and G'(D(i)) so as to continuously reduce residual uncanceled echo-distortion residuals. Figure 1 shows an input signal W(t) representative of a desired sound pressure wave being applied to a precompensating filter **12** according to the foregoing discussion in order to generate a precompensated loudspeaker input signal V(t). The precompensating filter **12** implements an inverse operation $\underline{H}^{-1}$ of an estimate $\underline{H}$ of the true non-linear transfer function H of the loudspeaker. Thus, if $\underline{H}$ and $\underline{H}^{-1}$ are perfectly modeled:

$$\underline{H}^{-1}(W(t)) = V(t)$$

and

$$\underline{H}(V(t)) = W'(t) = W(t).$$

If $\underline{H}$ and $\underline{H}^{-1}$ are close approximations of the true functions, then the loudspeaker will transform precompensated input signal V(t) into sound pressure wave W'(t) which is a close approximation of the desired sound pressure wave represented by input signal W(t).

Due to errors in the model parameters, however, the estimate may not be exact and distortions may still exist in the sound pressure waveform. This waveform propagates through the acoustic multi-path channel **18** to the microphone **20** creating sound signal Z(t) having an echo or ring-around portion. The whole path from precompensating filter **12** input signal W(t) to microphone amplifier **36** output sound signal Z(t) is modeled by echo filter **16**, and its coefficients, $a_1, a_2, a_3, ..., a_n$ are chosen to reduce the mean square error between its output estimated echo signal Z'(t) and the echo portion of signal Z(t). Z'(t) is preferably a close prediction of the echo portion of the signal Z(t) and may be subtracted from Z(t) to reduce the echo to a small residual component of signal E(t).

Practical implementations of such adaptive echo cancelers show increasing suppression of the residual echo portion of signal E(t) as the complexity of the echo filter **16** is increased. The complexity may be increased by increasing the number of coefficients $a_1$ used by the echo filter **16**. A limit is reached, however, due to non-linear loudspeaker distortions that are not modeled by the echo filter when not also using precompensation means. Since a preferred embodiment of the present invention reduces such distortions by a precompensating filter **12**, the residual echo portion of signal E(t) may be further reduced. If the precompensating filter **12** exactly canceled non-linear loudspeaker distortions, the residual echo portion of the signal E(t) could be reduced indefinitely by improving the linear channel modeling of echo filter **16.**

A process is now described whereby the parameters of the loudspeaker model relating to non-linear effects may be updated or "learned" to reduce the residual echo portion of signal E(t) by improving the approximation of the inverse $\underline{H}^{-1}$ of the loudspeaker transfer function H thereby improving the precompensating filter operation. Corresponding segments of the signals V(t), W(t) and Z(t) are first collected in precompensating filter modifier **34** which may include a memory. In order to best estimate non-linear effects, large signal segments of these signals are preferably collected. In a telephone with a loudspeaker for hands free operation, the ratio of microphone output sound signal to loudspeaker signal may be processed to determine which party is speaking. The signal segments should preferably be selected when only the distant party is speaking so that the microphone sound signal Z(t) does not contain locally generated speech. Accordingly, the microphone sound signal Z(t) will be made up almost entirely of echo or ring-around components. The coefficients $a_i$ of the echo filter 16 are then chosen so that the filter transforms the segment of signal W(t) to as close a match as possible to the echo portion of signal Z(t). This transformed signal is labeled Z'(t).

Then, a modified waveform W'(t) is calculated using the coefficients that would be transformed to the actual echo portion of signal Z(t). One method of deriving the waveform W'(t) is to use the best available FIR approximation to the inverse FIR filter, or to solve a set of equations for W'(t) samples to be input in order to obtain a close match to Z(t) samples at the output.

By finding estimated parameters of the loudspeaker transfer function $\underline{H}$ that transforms the given precompensated input signal V(t) segment to the modified W'(t) waveform segment, a model that correctly precompensates at least one input signal segment W(t) may be obtained such that the overall channel from precompensating filter input through the loudspeaker and multi-path channel is approximately a linear channel. If the waveform W'(t) segment is sufficiently representative of all possible waveforms, then the precompensating filter operation may be correct for all other waveforms. This criteria may be achieved if the segments are long enough to contain many examples of waveforms and spectra.

It will now be explained how the model parameters can be updated so that a given precompensated input signal V(t) applied to the input node **A** of the loudspeaker modeled in Figure 2 is transformed to a second given waveform W'(t) at output node **B** of the loudspeaker. The model of Figure 2 is first used to compute the signals at nodes **C'** and **D** from the precompensated input signal V(t) applied at input node **A**. This may be performed by the following discrete-time equations:

```
I(i) = (A(i) + Y*I(i-1) -C(i-1) )/(R+Y)     (10)
```

```
C(i) = (G(D(i-1)) + X*C(i-1) - I(i))/(1+X)(11)
```

```
D(i) = D(i-1) - C(i)                        (12)
```

The inverse of equation (7) is obtained merely by reversing the sign of the delay modulation. Thus if:

$$C(i) = W(i) + 0.5(W(i+1) - W(i-1))*D(i)*dT \quad (7)$$

then:

$$W(i) = C(i) - 0.5(C(i+1) - C(i-1))*D(i)*dT. \quad (13)$$

The delay modulation parameter dT will now be updated such that equation (13) more accurately reproduces the given waveform W'(t). This is done by first precomputing the waveform:

$$B(i) = 0.5(C(i+1) - C(i-1))*D(i),$$

and then finding dT such that the sum of the squares of W'(i)-C(i)+B(i)*dT is reduced. This value of dT is given by:

$$dT = -\frac{1}{N} \Sigma ( B(i) * (W(i) - C(i)) ).$$

In other words, B(i) is correlated with W(i)-C(i) over i = 1 to N samples.

The non-linear diaphragm spring function G(t) may now be updated as follows. Equations (6) and (7) are used to compute samples C(i) and D(i) of signals C(t) and D(t) that would produce the desired sound pressure waveform. Equation (10) is then used to compute samples I(i) of the signal I(t) given C(i) and the given signal V(t) as samples V(i). Next, equation (8) is inverted to read:

$$G(D(i)) = I(i) + C(i) + (C(i) - C(i-1))*X$$

If function G(D(t)) is expressed as a polynomial $G_0*D(t) + G_1*D^2(t) + G_2*D^3(t)$ ..., the coefficients may be determined by a conventional least-squares polynomial fitting procedure. Note that this also updates the linear parameter $G_0$, which affects the modeling of the mechanical resonant frequency. Alternately, the Go parameter can be left unchanged and only the non-linear coefficients $G_1$, $G_2$, ... updated.

The method discussed above may require the calculation of an input waveform W'(t) to a given filter in order to obtain a given output signal Z(t) as accurately as possible. This effectively describes inverting the filter transfer function, which may not always be possible. Approximations to the inverse filter may be used if this approach is taken. These approximations may be computed, for example, by the techniques disclosed in Roberts & Mullis "Digital *Signal Processing"*, Addison-Wesley (1987), Chapter 7, the disclosure of which is incorporated herein by reference.

An alternative approach is to note that the sound pressure waveform W'(t) or input signal W(t) at the input of the precompensating filter, which is an inverse of the loudspeaker model of Figure 2, comprises of the sum of two parts due to the delay modulator 66, which is approximated by equation (13) as:

$$W(i) = C(i) - 0.5(C(i+1) - C(i-1))*D(i)*dT.$$

The first part of the equation C(i) is the non-delay-modulated waveform, and the second part is a product of the derivative and the integral of the same which is scaled by the delay modulation coefficient dT. Since the echo filter is linear, its output Z'(t) is the sum of outputs obtained by filtering the first and second parts of equation (13) separately. C(i) was originally computed by equation (7) from the waveform W'(t), and D(i) was computed using equations (6) to (9). Therefore, the second part of (13) may be computed as:

$$Q(i) = 0.5(C(i+1) - C(i))*D(i).$$

C(i) and Q(i) are then filtered separately by using the echo filter 16 in the forward direction to obtain samples of two signals $Z_1(t)$ and $Z_2(t)$ respectively. The discrete-time samples are denoted by $Z_1(i)$ and $Z_2(i)$. ALPHA times $Z_1$

(t) plus BETA times $Z_2$(t) is now calculated such that (ALPHA)*$Z_1$(t) + (BETA)*$Z_2$(t) equals Z(t) as closely as possible. The solution for ALPHA and BETA that reduces the mean square error in matching Z(i) is:

$$ALPHA = \frac{de - bf}{ad - bc}; \quad BETA = \frac{af - ce}{ad - bc}$$

where

$$a = \sum_i \left[ Z_1^2(i) \right]$$

$$d = \sum_i \left[ Z_2^2(i) \right]$$

and

$$b = c = \sum_i \left[ Z_1(i) * Z_2(i) \right].$$

Thus, new values ALPHA and BETA for the two signals C(i) and Q(i) are desired to be produced by the model of Figure 2 given the same precompensated input signal V(t). This channel is to be effected by updating the model parameters. However since a change in overall scaling can be effected by scaling the FIR filter coefficients, we will only update the ratio of the two signals C(i) and Q(i) produced by the model by updating the delay modulation parameter dT to a new value BETA/ALPHA. At the same time, the FIR coefficients of echo filter 16 are all multiplied by ALPHA. This results in the desired signals $Z_1$(t) and $Z_2$(t) still being produced as a sum signal that most closely matches Z(t) at the echo filter **16** output. Furthermore, the residual echo portion of signal E(t) will be reduced compared to its previous value through having improved the estimate of the non-linear delay modulation occurring in the loudspeaker. The diaphragm spring stress-strain polynomial coefficients may also be re-estimated without requiring inversion of the echo filter **16.**

Using the same precompensated input signal V(t) to the model of Figure 2, the output waveforms W(t) and $W_1$(t) are calculated with the original and a slightly modified polynomial coefficient. For example, the cubic coefficient $G_2$ is increased by 1/16th of its value. The change in waveform $W_1$(t)-W(t) is then filtered by the echo filter **16** to obtain a signal $Z_3$(t). The amount GAMMA of $Z_3$(t) is then found which causes Z'(t) to more closely match Z(t). That amount is given by the following equation:

$$\frac{\sum_i \left[ Z_3(i) * E(i) \right]}{\sum_i \left[ Z_3^2(i) \right]}$$

The cubic coefficient is then modified by adding GAMMA/16 of its original value to its existing value in order to create the desired signal $Z_3$(t) to reduce the residual echo portion of signal E(t).

Thus it has been shown above how a non-linear model of a loudspeaker may be modeled in terms of a number of parameters and inverted to produce a procedure for generating a precompensated loudspeaker input signal that will reduce the effects of loudspeaker distortion. It has also been disclosed how loudspeaker linear and non-linear model parameters can be measured for the purpose of tuning a precompensating filter, on installation for example. This specification also discloses how sound can be converted to a microphone output sound signal by using a microphone and then used to adaptively update the loudspeaker model parameters in order to successively improve the overall linearity of the combination of the loudspeaker and precompensating means. Such an invention can be useful in providing audio systems with improved sound fidelity as well as in improving echo cancellation in a loudspeaker telephone or cellular radiotelephone having a full-duplex, hands-free function.

As would be understood by a person skilled in the art, variations in the models and attendant equations can be made to suit particular applications or acoustic loudspeakers. Furthermore, the invention can be implemented using special analog signal processing circuits, special digital signal processing circuits with A-to-D and D-to-A convertors, general purpose programmable digital signal processing circuits, or combinations of the above. Accordingly, many modifications and other embodiments of the invention will come to one skilled in the art having the benefit of the teachings presented in the foregoing descriptions and the associated drawings. Therefore, it is to be understood that the invention is not to be limited to the specific embodiments disclosed, and that modifications are intended to be included within the scope of the appended claims.

**Claims**

1.  An adaptive precompensating loudspeaker telephone having a loudspeaker (14) for producing a sound pressure wave in response to an audio input signal which is applied to an audio input thereof, said sound pressure wave including a desired linear component which is a linear function of said audio input signal, and an undesired non-linear component which is a non-linear function of said audio input signal and a microphone (20) for converting said sound pressure wave into a sound signal, the adaptive precompensating loudspeaker telephone comprising:

    a precompensating filter (12) for precompensating an input signal representative of said desired linear component to produce a precompensated output signal, and for applying said precompensated output signal to said audio input such that said undesired non-linear component is reduced; and
    a precompensating filter modifier (34) responsive to said sound signal and said input signal for modifying said precompensating filter, to further reduce said undesired non-linear component.

2.  An adaptive precompensating audio system according to Claim 1 further comprising:

    an echo filter (16), responsive to said input signal, for generating an estimated echo signal;
    subtraction means (22) for subtracting said estimated echo signal from said sound signal such that an echo portion of said sound signal is reduced so as to provide a reduced echo sound signal and for providing said reduced echo sound signal to said precompensating filter modifier; and
    wherein said precompensating filter modifier is further responsive to said reduced echo sound signal.

3.  An adaptive precompensating audio system according to Claim 2 wherein said echo filter (16) comprises modification means for modifying said echo filter in response to said input signal, said estimated echo signal, and said sound signal, to further reduce said echo portion of said sound signal.

4.  An adaptive precompensating audio system according to Claim 2 wherein said echo filter (16) comprises a finite-impulse-response filter.

5.  An adaptive precompensating audio system according to Claim 1 wherein said precompensating filter (12) comprises a digital signal processor.

6.  An adaptive precompensating audio system according to Claim 1 wherein said precompensating filter (12) comprises means for performing a transformation of said input signal to produce said precompensated output signal, said transformation being an estimate of a non-linear transfer function of said loudspeaker.

7.  An adaptive precompensating audio system according to Claim 6 wherein said non-linear transfer function represents one of a delay modulation of said loudspeaker and a diaphragm stress-strain curve of said loudspeaker.

8.  An adaptive precompensating audio system according to Claim 1 wherein said precompensating filter modifier (34) comprises an input transducer (20) for converting said sound pressure wave into a sound signal.

9.  A method for adaptively precompensating for distortion in an audio system including a loudspeaker which produces a sound pressure wave in response to an audio input signal, the sound pressure wave including a desired linear component which is a linear function of the audio input signal, and an undesired non-linear component which is a non-linear function of the audio input signal, said method comprising the steps of:

providing an input signal representative of said desired linear component;

performing a precompensation function on said input signal to produce a precompensated output signal;

applying said precompensated output signal to said loudspeaker to produce an output sound pressure wave such that said undesired non-linear component is reduced;

determining a difference between said desired sound pressure wave and said output sound pressure wave; and

adapting said precompensation function in response to said difference to further reduce said undesired non-linear component.

10. A method according to Claim 9 further comprising the steps of:

performing an echo estimation function to generate an estimated echo signal in response to said input signal;

converting said output sound pressure wave to produce a sound signal including an echo portion;

subtracting said estimated echo signal from said sound signal to reduce said echo portion of said sound signal so as to provide a reduced echo sound signal; and

wherein said determining step comprises the step of determining the difference between the input signal and the reduced echo sound signal.

11. A method according to Claim 10 further comprising the step of adapting said echo estimation function in response to said input signal, said output sound pressure wave, and said estimated echo function, to further reduce said echo portion of said sound signal.

12. A method according to Claim 10 further comprising the step of comparing said input signal with said sound signal to determine when said sound signal substantially comprises only said echo portion, and wherein said adapting step is performed when said sound signal substantially comprises only said echo portion.

13. A method according to Claim 9 wherein said providing step comprises the step of providing a test signal.

**Patentansprüche**

1. Adaptives vorkompensierendes Lautsprechertelefon mit einem Lautsprecher (14) zum Erzeugen einer Schalldruckwelle als Antwort auf ein Audioeingangssignal, das an einen Audioeingang davon angelegt ist, wobei die Schalldruckwelle eine erwünschte lineare Komponente enthält, die eine lineare Funktion des Audioeingangssignals ist, und eine unerwünschte nichtlineare Komponente, die eine nichtlineare Funktion des Audioeingangssignals ist, und ein Mikrofon (20) zum Umwandeln der Schalldruckwelle in ein Schallsignal, wobei das adaptive vorkompensierende Lautsprechertelefon umfasst:

ein vorkompensierendes Filter (12) zum Vorkompensieren eines Eingangssignals, das für die erwünschte lineare Komponente repräsentativ ist, um ein vorkompensiertes Ausgangssignal zu erzeugen, und zum Anlegen des vorkompensierten Ausgangssignals an den Audioeingang, sodass die unerwünschte nichtlineare Komponente reduziert wird; und

einen Regler (34) des vorkompensierenden Filters, ansprechempfindlich auf das Schallsignal und das Eingangssignal zum Regeln des vorkompensierenden Filters, um die unerwünschte nichtlineare Komponente weiter zu reduzieren.

2. Adaptives vorkompensierendes Audiosystem nach Anspruch 1, außerdem umfassend:

ein Echofilter (16), ansprechempfindlich für das Eingangssignal, zum Erzeugen eines geschätzten Echosignals;

ein Subtraktionsmittel (22) zum Subtrahieren des geschätzten Echosignals vom Schallsignal, sodass ein Echoanteil des Schallsignals reduziert wird, um ein reduziertes Echoschallsignal bereitzustellen und zum Bereitstellen des reduzierten Echoschallsignals für den Regler des vorkompensierenden Filters; und

worin der Regler des vorkompensierenden Filters außerdem für das reduzierte Echoschallsignal ansprechempfindlich ist.

3. Adaptives vorkompensierendes Audiosystem nach Anspruch 2, worin das Echofilter (16) ein Regelmittel zum Regeln des Echofilters umfasst als Antwort auf das Eingangssignal, das geschätzte Echosignal und das Schallsignal, um den Echoanteil des Schallsignals weiter zu reduzieren.

4. Adaptives vorkompensierendes Audiosystem nach Anspruch 2, worin das Echofilter (16) ein FIR-Filter (Transversalfilter) umfasst.

5. Adaptives vorkompensierendes Audiosystem nach Anspruch 1, worin das vorkompensierende Filter (12) einen digitalen Signalprozessor umfasst.

6. Adaptives vorkompensierendes Audiosystem nach Anspruch 1, worin das vorkompensierende Filter (12) ein Mittel zum Ausführen einer Transformation des Eingangssignals umfasst, um das vorkompensierte Ausgangssignal zu erzeugen, wobei die Transformation eine Schätzung einer nichtlinearen Transferfunktion des Lautsprechers ist.

7. Adaptives vorkompensierendes Audiosystem nach Anspruch 6, worin die nichtlineare Transferfunktion eine der Folgenden repräsentiert: eine Verzögerungsmodulation des Lautsprechers und eine Spannung-Dehnung-Kurve der Membran des Lautsprechers.

8. Adaptives vorkompensierendes Audiosystem nach Anspruch 1, worin der Regler (34) des vorkompensierenden Filters einen Eingangs-Sender-Empfänger (20) zum Umwandeln der Schalldruckwelle in ein Schallsignal umfasst.

9. Verfahren zum adaptiven Vorkompensieren für Verzerrung in einem Audiosystem einschließlich eines Lautsprechers, der als Antwort auf ein Audioeingangssignal eine Schalldruckwelle erzeugt, wobei die Schalldruckwelle eine erwünschte lineare Komponente enthält, die eine lineare Funktion des Audioeingangssignals ist, und eine unerwünschte nichtlineare Komponente, die eine nichtlineare Funktion des Audioeingangssignals ist, wobei das Verfahren folgende Schritte umfasst:

Bereitstellen eines Eingangssignals, das für die erwünschte lineare Komponente repräsentativ ist;
Ausführen einer Vorkompensationsfunktion mit dem Eingangssignal, um ein vorkompensiertes Ausgangssignal zu erzeugen;
Anlegen des vorkompensierten Ausgangssignals an den Lautsprecher, um eine Ausgangs-Schalldruckwelle zu erzeugen, sodass die unerwünschte nichtlineare Komponente reduziert wird;
Bestimmen einer Differenz zwischen der erwünschten Schalldruckwelle und der Ausgangs-Schalldruckwelle; und
Angleichen der Vorkompensationsfunktion als Antwort auf die Differenz, um die unerwünschte nichtlineare Komponente weiter zu reduzieren.

10. Verfahren nach Anspruch 9, außerdem die folgenden Schritte umfassend:

Ausführen einer Echoschätzfunktion, um als Antwort auf das Eingangssignal ein geschätztes Echosignal zu erzeugen;
Umwandeln der Ausgangs-Schalldruckwelle, um ein Schallsignal zu erzeugen, das einen Echoanteil enthält;
Subtrahieren des geschätzten Echosignals vom Schallsignal, um den Echoanteil des Schallsignals zu reduzieren, damit ein reduziertes Echoschallsignal bereitgestellt wird; und
worin der Bestimmungsschritt den Schritt der Bestimmung der Differenz zwischen dem Eingangssignal und dem reduzierten Echoschallsignal umfasst.

11. Verfahren nach Anspruch 10, außerdem den Schritt umfassend, die Echoschätzfunktion als Antwort auf das Eingangssignal, die Ausgangs-Schalldruckwelle und die geschätzte Echofunktion anzupassen, um den Echoanteil des Schallsignals weiter zu reduzieren.

12. Verfahren nach Anspruch 10, außerdem den Schritt umfassend, das Eingangssignal mit dem Schallsignal zu vergleichen, um zu bestimmen, ob das Schallsignal im Wesentlichen nur den Echoanteil umfasst, und worin der Anpassungsschritt ausgeführt wird, wenn das Schallsignal im Wesentlichen nur den Echoanteil umfasst.

13. Verfahren nach Anspruch 9, worin der Schritt des Bereitstellens den Schritt des Bereitstellens eines Testsignals umfasst.

**Revendications**

1. Téléphone à haut-parleur à précompensation adaptative ayant un haut-parleur (14) en vue de produire une onde de pression acoustique en réponse à un signal d'entrée audio qui est appliqué à une entrée audio de celui-ci, ladite onde de pression acoustique comportant une composante linéaire désirée qui est une fonction linéaire dudit signal d'entrée audio, et une composante non linéaire non désirée qui est une fonction non linéaire dudit signal d'entrée audio et un microphone (20) pour convertir ladite onde de pression acoustique en un signal acoustique, le téléphone à haut-parleur à précompensation adaptative comprenant:

un filtre de précompensation (12) pour précompenser un signal d'entrée représentatif de ladite composante linéaire désirée en vue de générer un signal de sortie précompensé, et en vue d'appliquer ledit signal de sortie précompensé à ladite entrée audio de sorte que ladite composante non linéaire non désirée est réduite; et

un modificateur de filtre de précompensation (34) en réponse audit signal acoustique et audit signal d'entrée pour modifier ledit filtre de précompensation, en vue de réduire davantage ladite composante non linéaire non désirée.

2. Système audio à précompensation adaptative selon la revendication 1, comportant en outre:

un filtre d'écho (16), en réponse audit signal d'entrée, en vue de générer un signal d'écho estimé;

des moyens de soustraction (22) en vue de soustraire ledit signal d'écho estimé dudit signal acoustique de sorte qu'une partie d'écho dudit signal acoustique est réduite de manière à fournir un signal acoustique à écho réduit et de délivrer ledit signal acoustique à écho réduit audit modificateur de filtre de précompensation; et

dans lequel ledit modificateur de filtre de précompensation est en outre sensible audit signal acoustique à écho réduit.

3. Système audio à précompensation adaptative selon la revendication 2, dans lequel ledit filtre d'écho (16) comporte des moyens de modification pour modifier ledit filtre d'écho en réponse audit signal d'entrée, audit signal d'écho estimé, et audit signal acoustique, afin de réduire davantage ladite partie d'écho dudit signal acoustique.

4. Système audio à précompensation adaptative selon la revendication 2, dans lequel ledit filtre d'écho (16) comporte un filtre non récursif.

5. Système audio à précompensation adaptative selon la revendication 1, dans lequel ledit filtre de précompensation (12) comporte un processeur de signaux numériques.

6. Système audio à précompensation adaptative selon la revendication 1, dans lequel ledit filtre de précompensation (12) comporte des moyens en vue d'exécuter une transformation dudit signal d'entrée afin de générer ledit signal de sortie précompensé, ladite transformation étant une estimation d'une fonction de transfert non linéaire dudit haut-parleur.

7. Système audio à précompensation adaptative selon la revendication 6, dans lequel ladite fonction de transfert non linéaire représente l'une parmi une modulation de retard dudit haut-parleur et une courbe de tension - allongement de diaphragme dudit haut-parleur.

8. Système audio à précompensation adaptative selon la revendication 1, dans lequel ledit modificateur de filtre de précompensation (34) comporte un transducteur d'entrée (20) en vue de convertir ladite onde de pression acoustique en un signal acoustique.

9. Procédé en vue de précompenser de manière adaptative une distorsion dans un système audio comportant un haut-parleur qui produit une onde de pression acoustique en réponse à un signal d'entrée audio, l'onde de pression acoustique comportant une composante linéaire désirée qui est une fonction linéaire du signal d'entrée audio, et une composante non linéaire non désirée qui est une fonction non linéaire du signal d'entrée audio, ledit procédé comportant les étapes consistant à:

fournir un signal d'entrée représentatif de ladite composante linéaire désirée;

exécuter une fonction de précompensation sur ledit signal d'entrée pour produire un signal de sortie précompensé;

appliquer ledit signal de sortie précompensé audit haut-parleur pour produire une onde de pression acoustique de sortie de sorte que ladite composante non linéaire non désirée est réduite;

déterminer une différence entre ladite onde de pression acoustique désirée et ladite onde de pression acoustique de sortie; et

adapter ladite fonction de précompensation en réponse à ladite différence en vue de réduire davantage ladite composante non linéaire non désirée.

10. Procédé selon la revendication 9, comportant en outre les étapes consistant à:

exécuter une fonction d'estimation d'écho pour générer un signal d'écho estimé en réponse audit signal d'entrée;
convertir ladite onde de pression acoustique de sortie pour produire un signal acoustique comportant une partie d'écho;
soustraire ledit signal d'écho estimé dudit signal acoustique en vue de réduire ladite partie d'écho dudit signal acoustique de manière à délivrer un signal acoustique à écho réduit; et
dans lequel ladite étape de détermination comporte l'étape consistant à déterminer la différence entre le signal d'entrée et le signal acoustique à écho réduit.

11. Procédé selon la revendication 10, comportant en outre l'étape consistant à adapter ladite fonction d'estimation d'écho en réponse audit signal d'entrée, à ladite onde de pression acoustique de sortie, et à ladite fonction d'écho estimée afin de réduire davantage ladite partie d'écho dudit signal acoustique.

12. Procédé selon la revendication 10 comportant en outre l'étape consistant à comparer ledit signal d'entrée et ledit signal acoustique en vue de déterminer à quel moment ledit signal acoustique ne comporte considérablement que ladite partie d'écho, et dans lequel ladite étape d'adaptation est exécutée lorsque ledit signal acoustique ne comporte considérablement que ladite partie d'écho.

13. Procédé selon la revendication 9, dans lequel ladite étape de fourniture comporte l'étape consistant à fournir un signal de mise à l'essai.

EP 0 811 301 B1

FIG. 1.

10

14

W'(t)

V(t)

D-TO-A CONVERTER 26

24

PRECOMPENSATING FILTER 12

ECHO FILTER 16

A-TO-D CONVERTER 30

W(t)

36

18

PRECOMPENSATING FILTER MODIFIER 34

Z'(t)

36

A-TO-D CONVERTER 28

Z(t)

20

$-$ $+$ 22

$\overline{E(t)}$

D-TO-A CONVERTER 32

38

FIG. 2.

14

A

$\overline{V(t)}$

40

42

$R_0$

44

$R_0$

$R_0$

$R_0$

46

I

$R_0$

$R_0$

50

52

54

C'

C

48

$R_0$

60

65

62

64

D

56

58

DELAY MODULATOR 66

B

W'(t)

**EP 0 811 301 B1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 393711 A
- US 4426552 A
- US 4340778 A
- US 4709391 A, Kaiser
- US 5131032 A
- US 5263019 A, Chu
- US 5237562 A, Fujii
- US 5084865 A, Koike

**Non-patent literature cited in the description**

- **DE VRIES et al.** *Digital Compensation of Nonlinear Distortion in Loudspeakers,* 1993, I-165-I-167
- **GAO et al.** *Adaptivle Linearization of A Loudspeaker,* 1991, 3589-3592